Europäisches Patentamt

European Patent Office

Office européen des brevets

(19)

(11) Veröffentlichungsnummer : **0 104 343**
**B1**

(12) # EUROPÄISCHE PATENTSCHRIFT

(45) Veröffentlichungstag der Patentschrift :
08.07.87

(51) Int. Cl.⁴ : **F 04 D  29/36**

(21) Anmeldenummer : **83107088.3**

(22) Anmeldetag : **20.07.83**

(54) **Strömungsmaschine mit verstellbaren Schaufeln.**

(30) Priorität : **06.09.82 DE 3233078**

(43) Veröffentlichungstag der Anmeldung :
**04.04.84 Patentblatt 84/14**

(45) Bekanntmachung des Hinweises auf die Patenterteilung : **08.07.87 Patentblatt 87/28**

(84) Benannte Vertragsstaaten :
**FR GB IT**

(56) Entgegenhaltungen :
**DE-C-  897 905**
**GB-A-  630 773**

(73) Patentinhaber : **Balcke-Dürr AG**
**Homberger Strasse 2 Postfach 1240**
**D-4030 Ratingen 1 (DE)**

(72) Erfinder : **Fickelscher, Kurt G.**
**Herderstrasse 19**
**D-6710 Frankenthal (DE)**

(74) Vertreter : **Klose, Hans, Dipl.-Phys.**
**Kurfürstenstrasse 32**
**D-6700 Ludwigshafen (DE)**

EP 0 104 343 B1

**Beschreibung**

Die Erfindung betrifft eine Strömungsmaschine mit verstellbaren Schaufeln, insbesondere eine hydraulische Propellerpumpe, mit einer um eine Längsachse drehbaren Nabe, mit um ihre jeweiligen Achsen drehbaren Schaufeln, deren Füße jeweils in Lagerträgern der Nabe gelagert sind, und mit einer Verstelleinrichtung, deren Verstellwelle über ein Zahnrad jeweils mit Getriebewelllen von selbstsperrenden Untersetzungsgetrieben in Wirkverbindung steht, wobei für jede Schaufel ein derartiges Untersetzungsgetriebe vorgesehen ist.

In der DE-C-897 905 ist eine Vorrichtung zum Verstellen der Flügel axial beaufschlagter Laufräder, insbesondere von Gebläsen, beschrieben. Bei dieser Vorrichtung ist in der Nabe jeweils für eine Schaufel ein Untersetzungsgetriebe vorgesehen, das eine parallel zur Längsachse der Nabe angeordnete Gewindespindel enthält. Über eine Gewindemutter, ein Gelenkglied sowie zwei Hebel erfolgt jeweils die Wirkverbindung der Gewindespindel mit der Schaufel. Der Verstellwinkel der Schaufel ist relativ klein, wobei für eine Vergrößerung die axiale Länge der Nabe entsprechend zu vergrößern wäre. Ferner müssen in der Nabe für die genannten Gewindespindeln jeweils entsprechende Lagerungen vorgesehen sein, die zumindest in Richtung der Drehachse für vergleichsweise große Kräfte auszulegen sind. Ein an der Schaufel angreifendes Drehmoment bewirkt eine entsprechend große Axialkraft, welche von den genannten Lagerungen aufgenommen werden muß. Ein nicht unerheblicher konstruktiver Aufwand ist erforderlich.

Ferner ist aus der GB-A-630 773 eine Strömungsmaschine bekannt, die im Bereich des Schaufelfußes einer einzigen Schaufel ein Untersetzungsgetriebe enthält. Dieses Untersetzungsgetriebe ist über eine Spindel betätigbar, wobei zusammen mit der Schaufel eine Speiche verstellt werden kann. Diese Speiche weist an ihrem radial innenliegenden Ende ein Zahnrad auf. Auch die übrigen Schaufeln sind entsprechend mit einer Speiche und einem radial innenliegenden Zahnrad versehen, wobei sämtliche Zahnräder über ein gemeinsames Zahnrad in Wirkverbindung stehen. Beim manuellen Betätigen der Spindel wird über die Speiche der einen Schaufel das gemeinsame Zahnrad gedreht, wodurch auch die übrigen Schaufeln verstellt werden können.

Die radiale Abfangung der Schaufeln erfolgt jeweils über die Speichen, die radial innen mit einer Ringschulter versehen sind. Es ist für sämtliche Schaufeln ein einziges Untersetzungsgetriebe vorhanden. Auf dieses Untersetzungsgetriebe wirken die an den Schaufeln angreifenden Kräfte in der Summe.

Durch Verstellen der Schaufeln kann bei Strömungsmaschinen unterschiedlichster Bauweise der Anströmwinkel bekanntlich vorgegeben werden, um eine Anpassung an die jeweiligen Betriebsbedingungen vornehmen zu können.

Dies gilt gleichermaßen für Antriebsmaschinen, genannt seien hier hydraulische Turbinen, als auch für Arbeitsmaschinen, wie zum Beispiel hydraulische Propellerpumpen oder Gebläse. So sind hydraulische Propellerpumpen mit Verstellpropellern bekannt, die zur Erzielung eines hohen Wirkungsgrades an unterschiedliche Betriebsweisen anpaßbar sind, um die Fördermenge von 0 bis 140 % der Nennfördermenge stufenlos verändern zu können. Hierdurch wird es möglich, die Propellerpumpe gegen eine Rückschlagklappe bei geschlossenem Propeller stoßfrei anfahren zu lassen, wobei das Hochfahren zur maximalen Fördermenge im Bereich von 20 Sekunden bis hin zu mehreren Minuten variierbar ist. Druckstöße beim Anfahren können weitgehend vermieden werden, und aufgrund der beim Anfahren relativ geringen Leistung kann ein schneller Hochlauf erfolgen, was im Hinblick auf die Auslegung der Antriebsmotoren von Vorteil ist. Auch kann beim Abschalten des Antriebsmotors auf die Verstelleinrichtung ein Schließsignal gegeben werden, damit beim Auslaufen des Propellers dessen Schaufeln in einer sogenannten Segelstellung stehen und eine Umkehrung der Drehrichtung vermieden wird. Nötigenfalls kann bei komplizierten Rohrleitungssystemen über die Verstellung der Schaufeln die Fördermenge mit einer vorgebbaren Verzögerung verändert werden, um beim Anfahren Druckstöße oder beim Schließen einer im Rohrleitungssystem vorhandenen Rückschlagklappe Wasserschläge zu vermeiden. Die aufgezeigten Zusammenhänge sind von maßgebender Bedeutung bei heute zum Einsatz gelangenden Kühlwasserpumpen, welche für Liefermengen bis zu 120.000 m³/h gebaut werden, und zwar für Förderhöhen zwischen 8 und 32 m. Bei bisher bekannt gewordenen Propellerpumpen dieser Dimensionen wirken die an den verstellbaren ·Schaufeln angreifenden Drehmomente praktisch im vollen Umfange auch auf die Verstelleinrichtung, welche für hohe Belastungen ausgelegt sein muß und folglich einen großen Platz- und Gewichtsbedarf erfordert.

Der Erfindung liegt die Aufgabe zugrunde, die Strömungsmaschine der eingangs genannten Art mit geringem Kosten- und Herstellungsaufwand dahingehend weiterzubilden, daß bei einem geringen Platz- und Gewichtsbedarf die Untersetzungsgetriebe bei geringem konstruktivem Aufwand in die Nabe integriert werden.

Zur Lösung wird vorgeschlagen, daß jedes Untersetzungsgetriebe zusammen mit dem jeweiligen Schaufelfuß in dem Lagerträger angeordnet ist, daß die Getriebewelle mittels eines dem Lagerträger zugeordneten Lagers gelagert ist, und daß der Lagerträger einen im wesentlichen hohlzylindrischen Ansatz aufweist, in welchen die Getriebewelle zumindest teilweise hineinragt.

Die vorgeschlagene Strömungsmaschine mit verstellbaren Schaufeln zeichnet sich durch einen einfachen und kostengünstigen Aufbau aus, zumal aufgrund des Untersetzungsgetriebes die an den Schaufeln angreifenden Momente von der Verstelleinrichtung praktisch ferngehalten werden. Wesentlich ist hierbei, daß sich der Kraftfluß jeweils unmittelbar auf dem kürzesten Wege über den Lagerträger schließt. Die Konstruktion der Strömungsmaschine wird hierdurch nicht unwesentlich vereinfacht. Darüberhinaus wird durch die vorgeschlagene Integration von Untersetzungsgetriebe und Schaufelfuß jeweils in dem gemeinsamen Lagerträger eine besonders kompakte und gewichtssparende Konstruktion erreicht, zumal der Lagerträger die genannten Kräfte und Momente ohne weiteres aufnehmen kann. Darüberhinaus können Schaufeln und Getriebe grundsätzlich vormontiert und nachfolgend in einfacher Weise in die Nabe eingesetzt werden. Hierdurch werden nicht unwesentliche Vorteile bei der Fertigung erreicht. Die Getriebewelle ist ebenso wie die Schaufel im gemeinsamen Lagerträger gelagert. Gegebenenfalls können im Lagerträger weitere Bauteile angeordnet sein, über welche die Getriebewelle im Lagerträger gelagert ist. Der im wesentlichen hohlzylindrische Ansatz des Lagerträgers, in welchen Ansatz die Getriebewelle zumindest teilweise hineinragt, gewährleistet eine hohe Stabilität bei kompakter Bauweise. Besteht der genannte Ansatz mit dem Lagerträger aus einem einzigen Stück, so wird eine hohe Stabilität und Festigkeit mit geringem Aufwand sichergestellt.

Eine besondere Weiterbildung der Strömungsmaschine ist dadurch gekennzeichnet, daß der Schaufelfuß mit einem Bauteil drehfest verbunden ist, welcher wenigstens eine dem Ansatz des Lagerträgers zugeordnete Lagerfläche aufweist. Ist ferner in dem Bauteil die Getriebewelle des Untersetzungsgetriebes gelagert, so wird durch das Ineinandergreifen von Getriebewelle, Bauteil sowie Ansatz eine funktionsgerechte und kompakte Konstruktion erreicht.

In einer besonderen Ausgestaltung ist der Bauteil im wesentlichen topfförmig ausgebildet, wobei eine radiale Außenfläche sowie eine axiale Außenfläche als Lagerflächen ausgebildet sind. Es ist bei geringem Platz- und Gewichtsbedarf eine kompakte Lagereinheit für den Schaufelfuß geschaffen, wobei durch die topfförmige Ausgestaltung des Bauteiles eine gute Ausnutzung des zur Verfügung stehenden Materials und Volumens erreicht wird.

Eine weitere Ausgestaltung ist dadurch gekennzeichnet, daß mit dem Lagerträger und ferner mit dem Schaufelfuß, zweckmäßig über den genannten Bauteil, ein Zahnkranz verbunden ist. Dieser Zahnkranz ist Bestandteil des Untersetzungsgetriebes, und eine günstige Integration von Untersetzungsgetriebe, Lagerträger und Schaufelfuß wird erreicht.

In einer besonders wesentlichen Ausgestaltung ist das Untersetzungsgetriebe als ein Gleitkeilgetriebe ausgebildet, welches zwei nebeneinanderliegende Zentralräder bzw. Zahnkränze mit unterschiedlichen Zähnezahlen sowie ein Planetenrad aufweist, dessen Zähne mittels eines kraftübertragenden Antriebselements In die virtuellen Zahnlücken zwischen den Zahnkränzen der genannten Zentralräder gedrückt werden. Ein derartiges Gleitkeilgetriebe ist in der US-A-40 99 427 ausführlich beschrieben, und es wird hierauf ausdrücklich Bezug genommen. Ein derartiges Gleitkeilgetriebe ermöglicht auf kleinstem Raum die Übertragung von sehr hohen Drehmomenten, wobei gleichzeitig die Spielfreiheit gewährleistet wird. Mit einem derartigen Untersetzungsgetriebe erfolgt eine Federbeaufschlagung zwischen den miteinander in Eingriff stehenden Zahnflanken von Planetenrad und Zentralräder, wodurch in besonders einfacher Weise die Spielfreiheit unter allen Betriebsbedingungen sichergestellt wird. Darüberhinaus gleiten die miteinander in Eingriff stehenden Zahnflanken aneinander, wodurch ferner eine Systemdämpfung erfolgt ; dies ist im Hinblick auf Schaufelschwingungen von wesentlicher Bedeutung.

In einer bevorzugten Ausgestaltung weist das Planetenrad des Untersetzungsgetriebes ein Zahnband auf, wobei gesteuert über die ovale bzw. exzentrische Außenfläche der Getriebewelle das Zahnband in die virtuelle Zahnlücken der genannten Zahnkränze nur teilweise eingreift und/oder auf den bevorzugt ebenen Zahnflanken der Zahnkränze gleitet. Ein derartiges Gleitkeilgetriebe kann bei kleinem Volumen vergleichsweise große Drehmomente übertragen und erfordert einen geringen Kosten- und Herstellungsaufwand. Ferner läßt sich ein derartiges Gleitkeilgetriebe besonders günstig in den Lagerträger sowie den Schaufelfuß bzw. das oben erwähnte Bauteil desselben integrieren, wodurch eine optimale Materialausnutzung erreicht wird.

In einer zweckmäßigen Ausführungsform sind die verschiedenen Getriebewellen bevorzugt über außenverzahnte Kegelräder mit einer gemeinsamen Verstellwelle verbunden. Somit wird in besonders einfacher Weise die getriebliche Verbindung hergestellt. Darüberhinaus wird die Montage und auch die gesamte Herstellung nicht unwesentlich erleichtert, da mittels der genannten Kegelräder ohne besonderen konstruktiven Aufwand die besagte Verbindung hergestellt werden kann.

In einer wesentlichen Ausgestaltung ist die Verstellwelle durch die aus einer Hohlwelle ausgebildete Maschinenwelle hindurchgeführt. Somit wird ohne besonderen Aufwand das betriebsmäßige Verstellen der Schaufeln über die durch die Maschinenwelle hindurchgeführte Verstellwelle ermöglicht. Die Einleitung des Verstellvorgang erfolgt über ein hier nicht weiter zu erläuterndes Verstellgetriebe.

In einer wesentlichen Ausführungsform weist das Untersetzungsgetriebe eine Untersetzung im Bereich von 1 : 60 bis 1 : 250, bevorkzugt 1 : 85 bis 1 : 200 auf. Es ist ersichtlich, daß aufgrund des angegebenen Untersetzungsverhältnisses selbst große Verstellmomente betriebssicher eingeleitet werden können und auch im Dauerbetrieb problemlos übertragbar sind. An dieser Stelle sei noch einmal besonders hervorgehoben, daß das erfindungsgemäß vorgesehene Untersetzungsgetriebe kinematisch selbstsperrend und im wesentlichen spielfrei ist.

Weitere Vorteile und erfindungswesentliche Merkmale ergeben sich aus den nachfolgend anhand der Zeichnung näher erläuterten Ausführungsbeispielen. Es zeigen:

Figur 1 schematisch einen axialen Längsschnitt durch eine als Propellerpumpe ausgebildete Arbeitsmaschine mit einer Hohlwelle für eine gemeinsame Verstellwelle,

Figur 2 eine Maschine ähnlich Fig. 1, jedoch mit einer Verstellwelle zur Handverstellung.

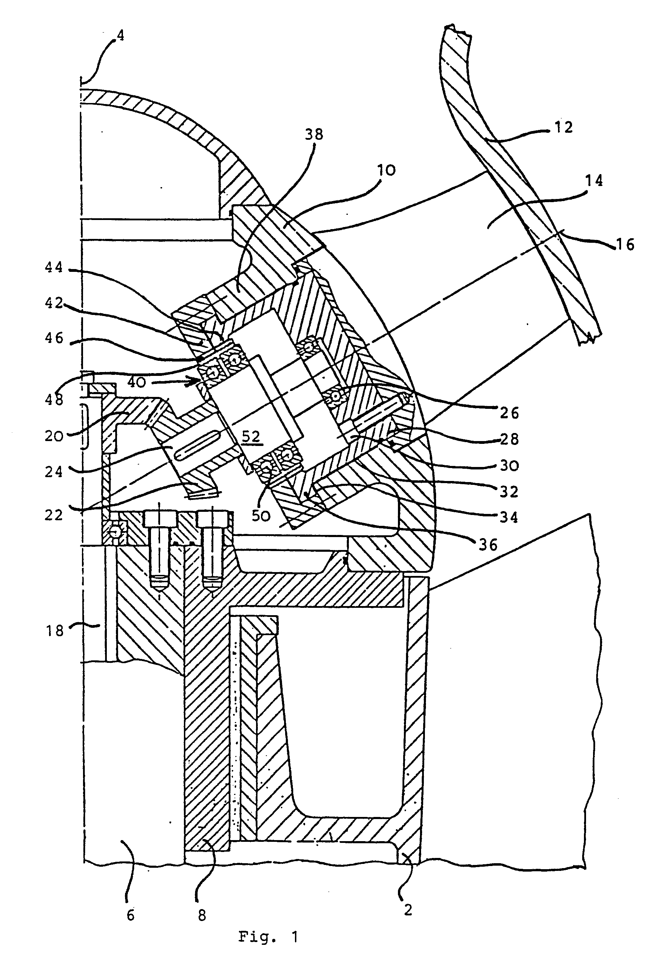

In Fig. 1 ist schematisch von der Maschine ein feststehendes Gehäuse 2 dargestellt, in welchem um eine Längsachse 4 eine Maschinenwelle 6 drehbar gelagert ist. Mit der Maschinenwelle 6 ist eine Nabe 8 drehfest verbunden, welche einen Lagerträger 10 aufweist. In dem genannten Lagerträger 10 sind, um die Längsachse 4 symmetrisch verteilt, eine Anzahl von hier nur schematisch angedeuteten Schaufeln 12 mit ihren Schaufelfüßen 14 angeordnet. Diese Schaufeln 12 sind jeweils um ihre Achsen 16 verstellbar, um über die nachfolgend zu beschreibende Verstelleinrichtung den jeweiligen Anforderungen entsprechend eingestellt werden zu können.

Es ist eine gemeinsame Verstellwelle 18 vorgesehen, welche durch die hier als eine Hohlwelle ausgebildete Maschinenwelle 6 hindurchgeführt ist und an ihrem vorderen Ende ein außenverzahntes Kegelrad 20 aufweist. Dieses Kegelrad 20 steht mit den zugeordneten Kegelrädern 22 der einzelnen Schaufeln 12 in Eingriff. Das Kegelrad 22 befindet sich am inneren Ende einer Getriebewelle 24, welche mittels eines kombinierten Axial- und Radiallagers, hier ein Schulterrillenkugellager, 26 in einem Bauteil 28 abgestützt ist. Das Bauteil 28 ist mit dem Schaufelfuß 14, beispielsweise mittels Schrauben 30 drehfest verbunden und ist in etwa topfförmig ausgebildet. Die Getriebewelle 24 ragt somit zumindest teilweise in dieses topfförmige Bauteil 28 hinein, welches mit seinen radialen sowie axialen Außenflächen auf entsprechenden Lagerflächen des Lagerträgers 10 abgestützt ist. Die axiale Außenfläche 34 befindet sich an einem Ring 36 des Bauteils 28, wobei dieser Ring einen größeren Außendurchmesser aufweist als das übrige Bauteil 28. Es ist ersichtlich, daß somit die Schaufel 12 mittels eines axialen, sowie radialen Gleitlagers in einen hohlzylindrischen Ansatz 38 des Lagerträgers 10 drehbar gelagert ist.

In dem genannten Ansatz 38 des Lagerträgers 10 ist ferner ein Untersetzungsgetriebe 40 mit der bereits erwähnten Getriebewelle 24 angeordnet. Das Untersetzungsgetriebe 40 ist hier als ein Gleitkeilgetriebe ausgebildet, welches zwei Zahnkränze 42, 44 mit unterschiedlichen Zähnezahlen aufweist. Der eine Zahnkranz 42 ist mit dem Ansatz 38 des Lagerträgers 10 drehfest verbunden, während der andere Zahnkranz 44 in dem Bauteil 28 des Schaufelfußes angeordnet ist. Diese innenverzahnten Zahnkränze stellen die Zentralräder des Untersetzungsgetriebes dar, welches im Prinzip als ein Planetengetriebe ausgebildet ist. Aufgrund der unterschiedlichen Zähnezahlen der Zahnkränze 42 und 44 sind virtuelle Zahnlücken vorhanden, in welche ein Zahnband 46 des Planetenrades eingreift. Das Zahnband 46 ist außen auf einen vergleichsweise dünnen Ring 48 aufgelegt, welcher über zwei Kugellager 50 auf der Außenfläche 52 der Getriebewelle 24 abgestützt ist. Die besagte Außenfläche 52 weist eine ovale oder auch exzentrische Kontur auf. Die Getriebewelle 24 weist somit aufgrund der derart ausgebildeten Außenfläche 52 in zwei um bevorzugt 90° versetzten Bereichen unterschiedliche Durchmesser auf. Entsprechend der Zähnezahldifferenz der Zahnkränze 42, 44 können die gewünschten Untersetzungsverhältnisse vorgegeben werden. Das erfindungsgemäß vorgeschlagene Untersetzungsgetriebe ist kinematisch selbstsperrend, so daß eine einmal eingestellte Winkelstellung der Schaufeln auch bei hohen an der Schaufel angreifenden Drehmomente eingehalten wird. Darüberhinaus ist die vorgeschlagene Kupplung zumindest näherungsweise spielfrei, so daß an den Schaufeln angreifende, intermitierende Kräfte in der Praxis nicht zu Schaufelschwingungen führen.

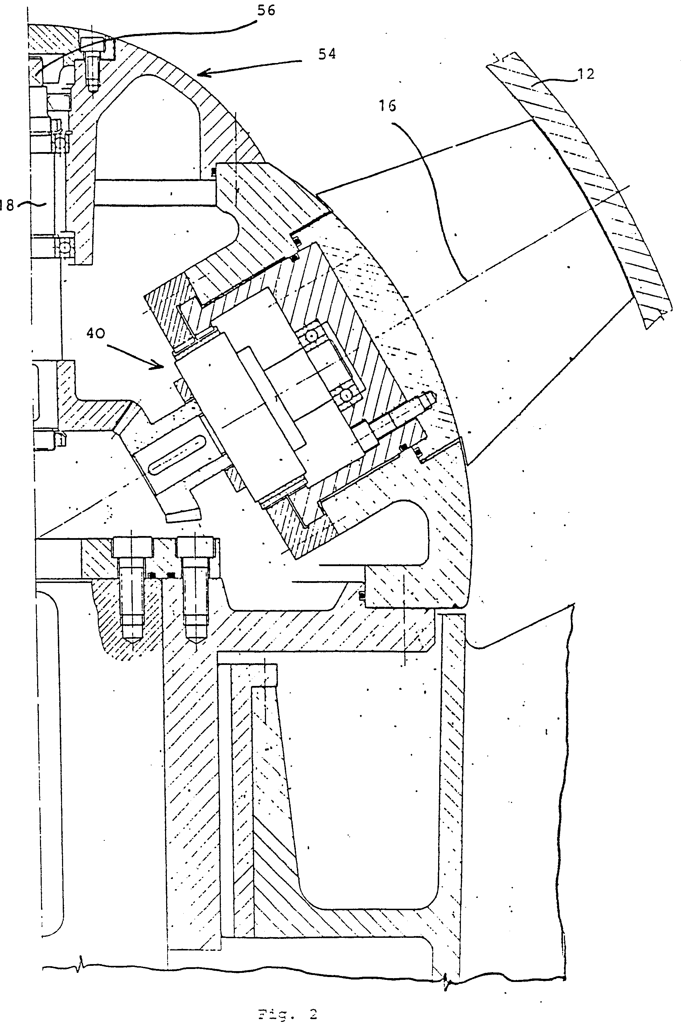

Die Ausführungsform gemäß Fig. 2 unterscheidet sich von der oben erläuterten im wesentlichen dadurch, daß hier die Verstellwelle 18 nicht durch die Maschinenwelle geführt ist. Vielmehr ist die Verstellwelle in der Spitze 54 des Propellers gelagert, wobei nunmehr keine Verstellung während des Betriebes der Maschine sondern eine Handverstellung ermöglicht wird. Die Verstellwelle 18 weist vorn ein Vierkant 56 auf, an welchem nach Abnahme einer Abdeckkappe 58 ein geeignetes Werkzeug angesetzt werden kann. Es ist ersichtlich, daß durch Drehen der Verstellwelle 18 auch hier die Einstellung der Schaufel 12 bezüglich ihrer Achsen 16 vorgenommen werden kann. Es sei an dieser Stelle besonders darauf hingewiesen, daß für beide Ausführungsformen der Lagerträger, samt Kupplung usw. identisch ausgebildet sind. Je nach Ausbildung der Maschinenwelle 6 und der Verstellwelle 18 wird zum einen die betriebsmäßige Verstellung oder zum anderen Handverstellung der Schaufeln 12 erreicht. Es bedarf keiner besonderen Hervorhebung, daß hierdurch Herstellungskosten eingespart werden können.

Bezugszeichenliste

| 2 | Gehäuse |
|---|---|
| 4 | Längsachse |
| 6 | Maschinenwelle |
| 8 | Nabe |
| 10 | Lagerträger |
| 12 | Schaufel |
| 14 | Schaufelfuß |
| 16 | Achse von 12 |
| 18 | Verstellwelle |
| 20 | Kegelrad zu 18 |
| 22 | Kagelrad zu 24 |
| 24 | Getriebewelle |

| | |
|---|---|
| 26 | Lager von 24 |
| 28 | Bauteil |
| 30 | Schraube |
| 32 | radiale Außenfläche von 28 |
| 34 | axiale Außenfläche von 28 |
| 36 | Ring |
| 38 | Ansatz |
| 40 | Untersetzungsgetriebe |
| 42, 42 | Zahnkranz |
| 46 | Zahnband |
| 48 | dünner Ring |
| 50 | Kugellager |
| 52 | Außenfläche von 24 |
| 54 | Spitze |
| 56 | Vierkant |
| 58 | Abdeckkappe |

## Patentansprüche

1. Strömungsmaschine mit verstellbaren Schaufeln, insbesondere hydraulische Propellerpumpe, mit einer um eine Längsachse (4) drehbaren Nabe, mit un ihre jeweiligen Achsen (16) drehbaren Schaufeln (12), deren Füße (14) jeweils in Lagerträgern (10) der Nabe (8) gelagert sind, und mit einer Verstelleinrichtung, deren Verstellwelle (18) über ein Zahnrad (20) jeweils mit Getriebewellen (24) von selbstsperrenden Untersetzungsgetrieben (40) in Wirkverbindung steht, wobei für jede Schaufel (12) ein derartiges Untersetzungsgetriebe (40) vorgesehen ist, dadurch gekennzeichnet, daß jedes Untersetzungsgetriebe (40) zusammen mit dem jeweiligen Schaufelfuß (14) in dem Lagerträger (10) angeordnet ist, daß die Getriebewelle (24) mittels eines dem Lagerträger (10) zugeordneten Lagers (26) gelagert ist, und daß der Lagerträger (10) einen im wesentlichen hohlzylindrischen Ansatz (38) aufweist, in welchen die Getriebewelle (24) zumindest teilweise hineinragt.

2. Strömungsmaschine nach Anspruch 1, dadurch gekennzeichnet, daß die Getriebewelle (24) und die Achse (16) jeder Schaufel (12) parallel und insbesondere koaxial zueinander angeordnet sind.

3. Strömungsmaschine nach Anspruch 1 oder 2, dadurch gekennzeichnet, daß der Schaufelfuß (14) mit einem Bauteil (28) drehfest verbunden ist, welcher wenigstens eine dem Ansatz (38) des Lagerträgers (10) zugeordnete Lagerfläche (32, 34) aufweist.

4. Strömungsmaschine nach Anspruch 3, dadurch gekennzeichnet, daß die Getriebewelle (24) des Untersetzungsgetriebes (14) mittels des Lagers (26) in dem Bauteil (28) gelagert ist.

5. Strömungsmaschine nach einem der Ansprüche 3 und 4, dadurch gekennzeichnet, daß der Bauteil (28) im wesentlichen topfförmig ausgebildet ist, wobei eine radiale Außenfläche sowie eine axiale Außenfläche als Lagerflächen (32, 34) ausgebildet sind.

6. Strömungsmaschine nach einem der Ansprüche 3 bis 5, dadurch gekennzeichnet, daß mit der Lagerträger (10) und ferner mit dem Schaufelfuß (14), zweckmäßig über den Bauteil (28), ein Zahnkranz (42, 44) verbunden ist.

7. Strömungsmaschine nach einem der Ansprüche 3 bis 6, dadurch gekennzeichnet, daß das Untersetzungsgetriebe (40) als ein Gleitkeilgetriebe ausgebildet ist, welches zwei in Richtung der Getriebewelle (24) nebeneinanderliegende Zahnkränze (42) mit unterschiedlichen Zähnezahlen und ferner ein Planetenrad mit Zähnen (46) aufweist, welche mittels eines Kraft übertragenden Antriebselements in die Zahnlücken zwischen den Zähnen der Zahnkränze (42, 44) gedrückt werden.

8. Strömungsmaschine nach Anspruch 7, dadurch gekennzeichnet, daß die Zähne (46) des Planetenrades auf einem Zahnband angeordnet sind, und daß die Getriebewelle (24) eine exzentrische Außenfläche (52) aufweist, über welche die Zähne (46) des Zahnbandes in die genannten Zahnlücken zwischen den Zähnen der Zahnkränze (42, 44) zumindest teilweise hineingedrückt werden.

9. Strömungsmaschine nach einem der Ansprüche 1 bis 8, dadurch gekennzeichnet, daß die gemeinsame Verstellwelle (18) über das Zahnrad (20) jeweils mit einem Zahnrad (22) in Eingriff steht, das auf der jeweiligen Getriebewelle (24) angeordnet ist.

10. Strömungsmaschine nach Anspruch 9, dadurch gekennzeichnet, daß das Zahnrad (20) der gemeinsamen Verstellwelle (18) und die Zahnräder (22) der jeweiligen Getriebewellen (24) als Kegelräder ausgebildet sind.

11. Strömungsmaschine nach einem der Ansprüche 1 bis 10, dadurch gekennzeichnet, daß die Verstellwelle (18) durch die als eine Hohlwelle ausgebildete Maschinenwelle (6) hindurchgeführt ist.

## Claims

1. Fluid flow machine with adjustable blades, in particular a hydraulic axial-flow pump with a hub rotatable about a longitudirial axis (4), with blades (12), rotatable about their respective axes (16), whose bases (14) are in each case stored in bearing casings (10) of the hub (8), and with an adjustment device whose adjusting shaft (18) is in each case in effective connection through a toothed wheel (20) with gear shafts (24) of self-locking stepdown gears (40), where each blade (12) is provided with such a step-down gear (40), characterised in that each step-down gear (40) is arranged, together with its respective blade base (14) in the bearing casing (10), that the gear shaft (24) is set by means of a bearing (26) arranged in the bearing casing (10), and that the bearing casing (10) has an essentially hollow and cylindrical neck (38), into which the gear shaft (24) at least partially projects.

2. Fluid flow machine according to claim 1, characterised in that the gear shaft (24) and the axis (16) of each blade (12) are arranged in parallel and, in particular, coaxially.

3. Fluid flow machine according to claims 1 or 2, characterised in that the blade base (14) is connected to a construction element (28) so as not to allow rotation, of which at least one bearing surface (32, 34) is arranged in the neck (38) of the bearing casing (10).

4. Fluid flow machine according to claim 3, characterised in that the gear shaft (24) of the step-down gear (14) is set in the construction element (28) by means of the bearing (26).

5. Fluid flow machine according to one of claims 3 and 4, characterised in that the construction element (28) is formed essentially in the shape of a pot, where, both a radial outer surface and an axial outer surface are formed as bearing surfaces (32, 34).

6. Fluid flow machine according to one of claims 3 to 5, characterised in that a toothed ring (42, 44) is connected with the bearing casing (10) and further with the blade base (14), usefully through the construction element (28).

7. Fluid flow machine according to one of claims 3 to 6, characterised in that the step-down gear (40) is formed as a sliding wedge gear with two toothed rings (42) with different numbers of teeth, next to each other in the direction of the gear shaft (24) and, further, a planet wheel with teeth (46) which are pressed into the gaps between the teeth of the tooth ring (42, 44) by means of a power-transferring drive element.

8. Fluid flow machine according to claim 7, characterised in that the teeth (46) of the planet wheel are arranged on a toothed ribbon, and that the gear shaft (24) has an eccentric outer surface (52), by which the teeth (46) of the toothed ribbon are at lease partly pressed into the gaps between the teeth of the toothed rings (42, 44).

9. Fluid flow machine according to one of claims 1 to 8, characterised in that the common adjustment shaft (18) engages, by means of toothed wheel (20), in each case with a toothed wheel (22) arranged on the respective gear shaft (24).

10. Fluid flow machine according to claim 9, characterised in that the toothed wheel (20) of the common adjustment shaft (18) and the toothed wheels (22) of the respective drive shafts (24) are formed as conical gear wheels.

11. Fluid flow machine according to one of claims 1 to 10, characterised in that the adjustment shaft (18) is led through the machine shaft (b) formed as a hollow shaft.

**Revendications**

1. Turbomachine à pales à pas variable, en particulier pompe-hélice hydraulique, comprenant un moyeu qui peut tourner autour d'un axe longitudinal (4), des pales qui tournent autour de leurs axes respectifs (16) et dont les pieds (14) tourillonnent respectivement dans des supports de paliers (10) du moyeu (8), et un dispositif de changement de pas dont l'arbre de changement de pas (18) est en liaison cinématique, par l'intermédiaire d'une roue dentée (20), avec les arbres (24) de réducteurs autobloquants (40), dans laquelle il est prévu pour chaque pale (12) un réducteur (40) de ce genre, caractérisée en ce que chaque réducteur est monté dans le support de paliers (10), conjointement avec le pied de pale (40) correspondant, en ce que l'arbre (24) du réducteur tourillonne au moyen d'un palier (26) associé au support de paliers (10), et en ce que le support de paliers (10) présente un prolongement sensiblement cylindrique creux (38) dans lequel l'arbre (24) pénètre au moins partiellement.

2. Turbomachine selon la revendication 1, caractérisée par le fait que l'arbre (24) du réducteur et l'axe (16) de chaque pale (12) sont disposés parallèlement entre eux et, en particulier, coaxialement entre eux.

3. Turbomachine selon la revendication 1 ou 2, caractérisée en ce que le pied de pale (14) est relié solidairement en rotation à un élément (28) qui présente au moins une surface de portée (32, 34) associée au prolongement (38) du support de paliers (10).

4. Turbomachine selon la revendication 3, caractérisée en ce que l'arbre (24) du réducteur (14) tourillonne dans l'élément (28) au moyen du palier (26).

5. Turbomachine selon l'une des revendications 3 et 4, caractérisée en ce que l'élément (28) est sensiblement en forme de godet, une surface extérieure radiale et une surface extérieure axiale de cet élément formant des surfaces de portée (32, 34).

6. Turbomachine selon l'une des revendications 3 à 5, caractérisée en ce qu'une couronne dentée (42, 44) est solidaire du support de paliers (10) et, qu'une autre couronne dentée est solidaire du pied de pale (14) avantageusement par l'intermédiaire de l'élément (28).

7. Turbomachine selon l'une des revendications 3 à 6, caractérisée en ce que le réducteur (40) est constitué par un réducteur à clavette coulissante qui comprend deux couronnes dentées (42) qui sont juxtaposées dans la direction parallèle à l'arbre (24) du réducteur et possèdent des nombres de dents différents et, en outre, une roue planétaire munie de dents (46) qui est pressée, au moyen d'un élément de transmission de la force, dans les creux de denture formée entre les dents des couronnes dentées (42, 44).

8. Turbomachine selon la revendication 7, caractérisée en ce que les dents (46) de la roue planétaire sont montées sur une bande dentée et en ce que l'arbre (24) du réducteur présente une surface externe excentrique (52) par l'intermédiaire de laquelle les dents (46) de la bande dentée sont engagées au moins partiellement dans les creux de denture précités formés entre les dents des couronnes dentées (42, 44).

9. Turbomachine selon l'une des revendications 1 à 8, caractérisée en ce que l'arbre de changement de pas commun (18) est en prise, par l'intermédiaire de la couronne dentée (20) avec une roue dentée (22) qui est montée sur l'arbre réducteur (24) correspondant.

10. Turbomachine selon la revendication 9, caractérisée en ce que la roue dentée (20) de l'arbre de changement de pas commun (18) et les roues dentées (22) des réducteurs (24) sont constituées par des roues coniques.

11. Turbomachine selon l'une des revendications 1 à 10, caractérisée en ce que l'arbre de changement de pas (18) est enfilé à travers l'arbre (6) de la machine, qui est constitué par un arbre creux.

Fig. 1

Fig. 2